# EUROPÄISCHE PATENTSCHRIFT

(11) **EP 3 627 258 B1**
(45) Veröffentlichungstag und Bekanntmachung des Hinweises auf die Patenterteilung: **31.07.2024**
(21) Anmeldenummer: 18195760.6
(22) Anmeldetag: 20.09.2018
(51) Int. Cl.: G05B 19/418, B21D 43/05, B30B 15/14, B30B 15/30, B30B 15/32

(54) **BEWEGUNGSPLANUNG FÜR EINE SERVOPRESSE**
MOTION PLANNING FOR A SERVO PRESS
PLANIFICATION DE MOUVEMENT POUR UNE PRESSE SERVO

(43) Veröffentlichungstag der Anmeldung: 25.03.2020
(73) Patentinhaber: Siemens Aktiengesellschaft, 80333 München (DE)
(72) Erfinder: Dietz, Bernd, 91074 Herzogenaurach (DE); Hoja, Stephan, 90556 Cadolzbrug (DE); Stöckel, Tina, 91088 Bubenreuth (DE)
(74) Vertreter: Siemens Patent Attorneys

(56) Entgegenhaltungen:
- EP-A1- 3 315 267
- DE-A1- 102005 024 822

## Beschreibung

Die Erfindung betrifft ein Verfahren zur Bewegungsplanung für eine Servopresse sowie eine Bewegungssteuerung ausgebildet zur Bewegungsplanung für eine Servopresse sowie ein zugehöriges Computerprogrammprodukt.

In der Umformindustrie werden Pressen, beispielsweise Servopressen, eingesetzt zum Umformen bzw. Pressen von Material. Dabei kommen auch Pressen zum Einsatz, welche mehrere Bearbeitungsstationen innerhalb einer einzigen Presse aufweisen. Dabei ist insbesondere die Pressen- oder Umformbewegung in allen Bearbeitungsstationen gleich oder der Zyklus aller Werkzeuge in den einzelnen Bearbeitungsstationen gleich. Das bedeutet, dass ein Transportsystem, auch Transfersystem oder Transfer genannt, eine Bewegung eines Bearbeitungsgutes innerhalb der Servopresse während der einheitlichen Öffnungsphase der Servopresse vornimmt. D.h., während die Servopresse geöffnet ist, hat der Transfer die Möglichkeit, Material innerhalb der Servopresse zu bewegen, insbesondere in die Presse hinein zu bewegen, aus der Presse heraus zu bewegen oder innerhalb der Presse umzuverlegen, ohne dass eine Kollision zwischen Transfer und Servopresse stattfindet.

Die verschiedenen Bearbeitungsstationen innerhalb einer Servopresse entsprechen insbesondere einzelnen Umformstufen des umzuformenden Werkstücks innerhalb der Presse, insbesondere mittels einzelner Werkzeuge.

Abhängig von Parametern wie der Größe oder dem Gewicht des Werkstücks oder der Vorrichtungen benötigt das Transfersystem ausreichend Platz und Zeit für die Erledigung der Transportaufgabe.

Je nachdem, wie das Werkstück in einer Presse umgeformt werden soll, ergibt sich abhängig von Umformparametern ein passendes Bewegungsprofil der Presse. Das Bewegungsprofil gibt die Durchführung der Pressenumformbewegung sowie der Bewegung außerhalb des Umformbereiches vor.

An einer Servopresse können programmierbare Profile gefahren werden. Ein zugehöriges Transfersystem oder Handlingsystem ist auf ein solches programmierbares Servopressenprofil zu synchronisieren. Es ist bekannt, für die Synchronisierung einen virtuellen Pressengeber zu verwenden, der den Maschinentakt in einem 360°-Zyklus ähnlich wie bei einer mechanischen Schwungradpresse abbildet und somit als Maschinenreferenz genutzt werden kann. Das Pressenprofil wird damit beispielsweise als Kurvenscheibe in Abhängigkeit von diesem Leitwert definiert. Daraus ergibt sich, dass eine Veränderung des Bewegungsprofils der Servopresse beispielsweise auch eine Anpassung der Profile der Transfersysteme erfordert. Beispielsweise ändert sich durch eine Änderung des Pressenprofils der Zusammenhang zwischen virtuellem Leitwert und Pressenöffnung, sodass als Resultat beim Transfer der Leitwert angepasst oder verschoben wird. Beispielsweise bedingt eine niedrigere Geschwindigkeit der Presse während des Umformens auch mehr Zeit für das Handlingsystem in diesem Abschnitt. Das verändert die Referenzpunkte zwischen Transfersystem und Presse.

Herkömmlicherweise wird ein Bauteil per Try-and-Error eingefahren und die so ermittelte passende Einstellung quasi als Rezept und als ein Datensatz gespeichert. Bei Anpassung oder Veränderung der Transferbewegung ist ein Servopressenprofil auf die Transferbewegung anzupassen, was herkömmlicherweise erneut über try-and-error-Verfahren geschieht. Genauso zieht ein geändertes Bewegungsprofil der Servopresse ein neues Einfahren und Testen der Transportbewegung nach sich. Falls sich im Test Kollisionen ergeben, ist ein händisches Ermitteln eines passenden Transferbewegungsprofiles nötig.

Es bestehen im Stand der Technik Optimierungsmethoden, um ein zulässiges Bewegungsprofil für eine Servopresse ohne Berücksichtigung des Transfers zu ermitteln. Für ein so ermitteltes Bewegungsprofil kann eine Bewegung des Transfersystems angepasst werden, wobei über Try-and-Error das Servopressenbewegungsprofil variiert wird, bis ein realisierbares Transferbewegungsprofil damit zusammenpasst.

EP 3 315 267 A1 offenbart ein Verfahren zur Optimierung von Bewegungsprofilen einer Presse.

Die Offenlegungsschrift DE 10 2005 024 822 A1 zeigt ein Verfahren zur Optimierung der Transportbewegung von Werkstücken in Transferpressen, bei dem durch Manipulation einer Bewegungskurve in einem digitalen Abbild der Transferpresse Rückschlüsse auf Freigängigkeiten, Hubzahlen und Programmdaten für werkzeugspezifische Maschinensteuerung gezogen werden können.

Vor diesem Hintergrund besteht die Aufgabe der vorliegenden Erfindung darin, ein optimiertes Bewegungsprofil für eine Servopresse zu ermitteln, unter Vermeidung einer Kollision mit einem Transfersystem.

Diese Aufgabe wird durch den Gegenstand der unabhängigen Ansprüche gelöst. Vorteilhafte Ausgestaltungen sind in den abhängigen Ansprüchen angegeben.

Die Erfindung betrifft ein Verfahren nach Anspruch 1.

Die Transportvorrichtung ist in oder an der Servopresse vorgesehen. Die Transportvorrichtung umfasst dabei insbesondere Komponenten, welche zum Greifen des durch die Servopresse zu bearbeitenden Gutes vorgesehen oder ausgebildet sind. Beispielsweise sind Greifarme oder Klemmen vorgesehen, welche das Material zwischen den verschiedenen Umformprozessstufen innerhalb der Servopresse bewegt.

Unter einer Transportvorrichtung ist dabei ein Transfer oder eine Transfervorrichtung oder ein Zangen- oder Walzenvorschub oder ein Bewegungsroboter zu verstehen, welcher als Handlingsaufgabe die Transferbewegung eines durch eine Presse zu bearbeitenden Gutes umfasst.

Bei einem Walzenvorschub wird Material von zwei sich drehenden Walzen in eine Presse geschoben wird. Die Schubbewegung ist mit der Presse zu synchronisieren, um einen Transfer des Materials während der Pressenöffnungsphase sicherzustellen.

Die Transportvorrichtung ist derart in die Servopresse integriert, dass sich die Transportvorrichtung in einem geschlossenen Zustand der Servopresse außerhalb des Pressenarbeitsraumes oder in einer Aussparung der Servopresse befinden kann.

Die Transportvorrichtung weist insbesondere eine Vielzahl von Greifvorrichtungen auf, welche mehrere durch die Servopresse zu bearbeitende Güter aufnehmen können und synchron innerhalb der Servopresse transferieren. Beispielsweise weist eine Servopresse zehn Bearbeitungsstationen auf und es werden pro Transfervorgang neun Güter von einer Bearbeitungsstation zur nächsten transportiert. Eines, nämlich das in Vorschubrichtung innerhalb der letzten Bearbeitungsstation befindliche Gut, wird aus der Servopresse hinaus transportiert und zugleich wird in der ersten Bearbeitungsstation ein neues Bearbeitungsgut hinzugefügt.

Das Servopressenbewegungsprofil wird ermittelt, indem es beispielsweise anhand einer Berechnungseinheit berechnet wird oder aus einem Speicherbereich ausgelesen wird. Das Servopressenbewegungsprofil berücksichtigt Parameter, die durch die Servopresse und/oder den Umformvorgang festgelegt sind. Somit gehen in das Servopressenbewegungsprofil Parameter ein, welche durch die Servopresse selbst beeinflusst werden oder durch den durch die Servopresse durchzuführenden Umformvorgang. Dabei kann auch das Material oder eine Materialdicke eingehen, welche den Umformvorgang bestimmen oder beeinflussen.

In das Servopressenbewegungsprofil gehen beispielsweise mechanische, elektrische und /oder prozesstechnische Grenzwerte ein.

Das Servopressenbewegungsprofil kann einen Umlaufbetrieb oder einen Pendelbestrieb oder einen sonstigen Betrieb beschreiben.

Eine minimale Transferzeit ist auf Basis der Transportvorrichtung selbst zu ermitteln. Die Ausgestaltung der Transportvorrichtung und insbesondere deren Antriebe legen die Transferzeit fest, die für den Vorschub mindestens benötigt wird. Dabei wird die Transportvorrichtung insbesondere maximal schnell betrieben. Die minimale Transferzeit kann dabei anhand eines Tests in der realen Servopresse ermittelt werden oder anhand von geometrischen Daten der Transferstrecke sowie der aus den Antriebskenngrößen der Transportvorrichtungsantriebe ermittelbaren Dynamik der Transportvorrichtung, beispielsweise einer maximal möglichen Geschwindigkeit oder Beschleunigung, einer Verzögerung oder einem Ruck. Die minimale Transferzeit ergibt sich beispielsweise für einen 3D-Transfer aus einer minimal benötigten Zeitdauer für ein Greifen und Anheben des Gutes, aus der minimalen Zeitdauer für den Vorschub innerhalb der Presse zur nächsten Bearbeitungsstation und einer minimal benötigten Zeitdauer für ein Absenken und Absetzen des Gutes. Bei einem Zangen- oder Walzenvorschub ist die minimale Transferzeit beispielsweise eine minimale Vorschubzeitdauer.

Ebenso ist eine minimale Rücklaufzeit auf Basis der Transportvorrichtung selbst zu ermitteln. Je nach Ausgestaltung der Transportbewegung kann auch die Rücklaufzeit eine Limitierung des Servopressenbewegungsprofils bedeuten, wenn beispielsweise ein Transfer für die Rückfahrt eine längere Zeitspanne benötigt, als die Servopresse für die Umformung benötigt. Die minimale Rücklaufzeit ergibt sich für einen 3D-Transfer beispielsweise aus einer minimalen Zeit zum Herausfahren aus der Presse nach Absetzen des Materials, einer minimalen Zeitdauer für die Rückfahrt und einer minimalen Zeit für das Hineinfahren in die Presse bis zur Aufnahme neuen Materials.

Ein mit dem vorgeschlagenen Verfahren ermitteltes Servopressenprofil weicht insbesondere dann von einem Profil für die Servopresse ab, welches ohne Berücksichtigung der Transportbewegung berechnet wird, wenn die minimale Transferzeit die Zeitdauer, die aufgrund geometrischer Gegebenheiten in der Presse für die Transferbewegung vorgesehen wäre, übertrifft. Mit anderen Worten ist ein Servopressenbewegungsprofil insbesondere dann an die Transferbewegung anzupassen, wenn die Transportvorrichtung den Transport des zu bearbeitenden Gutes innerhalb der Zeitdauer, in der keine Kollision auftritt, nicht vollständig durchführen kann. Falls die minimale Transferzeit die zur Verfügung stehende Zeitdauer übertrifft, wird die minimale Vorschubzeitdauer als Eingangsparameter für das Berechnen des Servopressenbewegungsprofils verwendet und beeinflusst dieses. Genauso wirkt sich der Einfluss der Transportbewegung bei der Rückfahrt der Transportvorrichtung auf das Servopressenprofil aus, wenn die minimale Rücklaufzeit die Zeitdauer, die durch die Phase zwischen Pressenschließung und Pressenöffnung durch das nicht-angepasste Pressenprofil festgelegt ist, übertrifft.

Unter einem Vorschub wird in der vorliegenden Anmeldung die Bewegung innerhalb eines kollisionsgefährdeten Bereiches bezeichnet, die den Transfer, also die Bewegung des Gutes innerhalb der Servopresse betrifft. Die Vorschubbewegung beginnt dabei beispielsweise im Falle eines 3-D-Transfers anschließend an ein Schließen des Transfers und ein Heben des Gutes und endet vor dem Senken.

Als Transportbewegung wird in der vorliegenden Anmeldung die Bewegung der Transportvorrichtung über den ganzen Bewegungszyklus hinweg bezeichnet.

Als Transferbewegung wird die Bewegung der Transportvorrichtung bezeichnet, die den Transfer des Gutes betrifft, das heißt ab Zeitpunkt der Bewegung des Gutes, z.B. dessen Aufn
ahme, inklusive des Vorschubs bis hin zum Ablegen des Gutes. Die Transferbewegung wird innerhalb der Transferzeit durchgeführt.

Als Rücklaufbewegung wird entsprechend der restliche Teil eines Zyklus der Transportbewegung, der nicht Transferbewegung ist. Die Rücklaufbewegung wird innerhalb der Rücklaufzeit durchgeführt.

Auf vorteilhafte Weise wird das Ausrichten eines Servopressenbewegungsprofils auf zeitliche Kenngrößen eines Transferbewegungsprofils ermöglicht.

Die geometrische Pressenöffnung wird durch eine mechanische Größe der Presse, wie beispielsweise einen Winkel, einen Exzenterwinkel, eine Hubhöhe oder eine Lage beschrieben, die den geöffneten Zustand der Presse beschreibt, so dass die Transportvorrichtung kollisionsfrei die Transferbewegung starten kann. Beispielsweise ist dies bei einem 3D-Transfer der Zustand, in dem der Transfer in die Presse einfahren kann und dort den Transfer durchführen kann. Dabei wird jeweils das Transportsystem einschließlich der Transportvorrichtung, beispielsweise des Greifers berücksichtigt. Eine Kollision ist dabei zwischen der Servopresse und sämtlichen Komponenten der Servopresse und der Transportvorrichtung mit allen ihren Komponenten und dem zu bearbeitenden Gut, insbesondere auch während der Hebebewegung zu vermeiden. Die geometrische Pressenöffnung und Pressenschließung hängt davon ab, wie die Servopresse geometrisch ausgestaltet ist und wie ferner die Transportvorrichtung geometrisch ausgestaltet ist. Beispielsweise sind die geometrischen Abmessungen der Servopresse und der Transportvorrichtung zu berücksichtigen. Ferner wirkt sich auch die Geometrie des zu bearbeitenden Gutes oder mehreren innerhalb der Servopresse zu bearbeitenden Güter in den verschiedenen Umformstufen auf den kollisionsgefährdeten Bereich aus. Je nach Größe, Form oder Gewicht kann das zu transferierende Gut je nach Transportstrecke oder je nach Station räumlich unterschiedlich angeordnet sein. Eine Kollision zwischen Transportvorrichtung einschließlich des Werkstückes und der Servopresse sollte für alle Transferstrecken vermieden werden.

Auf vorteilhafte Weise wird vermieden, dass in einem Fall, in welchem die Transferzeit bzw. die Rücklaufzeit länger ist als eine Zeitdauer, die für den Transportvorgang innerhalb bzw. außerhalb des kollisionsgefährdeten Bereiches zur Verfügung steht, das Servopressenbewegungsprofil quasi starr an die minimale Vorschubzeitdauer oder die minimale Rückfahrtzeit angepasst wird und die Servopressenbewegung lediglich entsprechend skaliert wird. Durch ein solches Hochskalieren mit Rücksicht auf die Bewegung des Transfers ist nachteiliger Weise auch eine entsprechend schlechtere Hubzahl verbunden. Wird jedoch das Servopressenbewegungsprofil unter Berücksichtigung der minimalen Transferzeit und der minimalen Rücklaufzeit optimiert, so kann beispielsweise ein Abschnitt des Servopressenbewegungsprofils, in welchem das Transportsystem die Vorschubbewegung ausführt, entsprechend verzögert werden, zugleich aber der Umformvorgang selbst unverändert, insbesondere unverändert schnell, beispielsweise entsprechend eines Servopressenbewegungsprofils, das auch ohne Berücksichtigung des Transfers in diesem Bewegungsabschnitt ermittelt würde, optimiert durchgeführt werden. Insgesamt ändert sich eine Hubzahl einer Servopressenanlage mit Transportvorrichtung in einem Fall, in welchem das Servopressenbewegungsprofil aufgrund der benötigten Zeit für die Vorschubbewegung des Transfers anzupassen ist, die Hubzahl verschlechtert sich aber auf vorteilhafte Weise nur so wenig wie möglich.

Wird ebenso das Servopressenbewegungsprofil unter Berücksichtigung der minimalen Rücklaufzeit optimiert, so kann beispielsweise ein Abschnitt des Servopressenbewegungsprofils, in welchem das Transportsystem die Rückfahrt durchführt, entsprechend verzögert werden, zugleich aber die Pressenbewegung außerhalb des kollisionskritischen Bereiches unverändert, insbesondere unverändert schnell, beispielsweise entsprechend eines Servorpessenbewegungsprofils, das auch ohne Berücksichtigung des Transfers in diesem Bewegungsabschnitt ermittelt würde, optimiert durchgeführt werden. Insgesamt ändert sich eine Hubzahl einer Servopressenanlage mit Transportvorrichtung in einem Fall, in welchem das Servopressenbewegungsprofil aufgrund der benötigten Zeit für die Rückfahrtbewegung des Transfers anzupassen ist, die Hubzahl verschlechtert sich aber auf vorteilhafte Weise nur so wenig wie möglich.

Vorteilhafterweise ist auch ein Abändern des Umformprozesses oder ein Umrüsten auf ein neues Werkzeug auf einfache Weise und insbesondere ohne ein erneutes aufwendiges Einstellen der Transferbewegung und des Servopressenbewegungsprofils möglich. Benötigt beispielsweise die Transportvorrichtung aufgrund eines neuen Werkzeuges mehr Zeit, kann ein Servopressenbewegungsprofil anhand der vorgestellten Methode ermittelt werden. Dabei ist eine Kollision zwischen der Servopresse und der Transportvorrichtung einschließlich des Werkstückes ausgeschlossen und zugleich eine optimierte Hubzahl gewährleistet. Die Servopresse kann mit optimiertem Bewegungsprofil und ohne ein try-and-error-Verfahren mit entsprechend verbundenen Stillstandszeiten und Ausschuss produzierenden Zyklen betrieben werden.

Erfindungsgemäß wird das Servopressenbewegungsprofil auf eine maximale Servopressenperformance hin optimiert. Das bedeutet, dass unter Berücksichtigung der vorgegebenen Parameter und Randbedingungen eine möglichst hohe Hubzahl sichergestellt wird.

In einer Variante wird ein Servopressenbewegungsprofil, welches lediglich Parameter der Servopresse oder des Umformvorgangs, nicht jedoch des Transfers, berücksichtigt, auf maximale Servopressenperformance hin optimiert. Ausgehend von diesem ermittelten Servopressenbewegungsprofil werden dann zusätzlich die erfindungsgemäßen Transportvorrichtungs-Eingangsparameter vorgegeben. Die dann zu berechnende Optimierung erfolgt wiederum unter der Vorgabe, dass eine maximale Pressenperformance erreicht wird. Maximale Hubzahl bedeutet dabei minimal mögliche Zyklusdauer. Ein Pressenzyklus soll also so kurz wie möglich sein.

Erfindungsgemäß wird das Servopressenbewegungsprofil auf eine maximale Servopressenperformance hin optimiert unter Berücksichtigung energieoptimierender Verzögerungen. Beispielsweise wird eine Hubzahl oder Zykluszeit der Servopresse gewählt, welche nicht überschritten werden soll, um eine energieoptimierte Anpassung an einen vorausgehenden oder nachfolgenden Bearbeitungsprozess zu ermöglichen.

Gemäß einer Ausgestaltung gehen als Parameter der Servopresse und/oder des Umformvorgangs eine maximale Motorgeschwindigkeit, eine maximale Stößelgeschwindigkeit, eine vorgebbare optimale Umformgeschwindigkeit und/oder geometrische Abmessungen eines Arbeitsbereiches ein. Es können je nach Anwendungsfall weitere Parameter eingehen. Somit wird das Servopressenbewegungsprofils auch in Hinblick auf die Pressenparamter und Umformparameter optimiert.

Gemäß einer Ausgestaltung gehen in die geometrischen Gegebenheiten Abmessungen der Transportvorrichtung und der Servopresse ein. Insbesondere sind diese auf vorteilhafte Weise während des Betriebes der Servopresse unveränderlich. Eine Anpassung während des Betriebes kann erforderlich werden, wenn ein Umformvorgang derart angepasst wird, dass das verarbeitete Werkstück geänderte Abmessungen aufweist. Dadurch kann beispielsweise ein geänderter Greifmechanismus an der Transportvorrichtung erforderlich werden, welcher die Abmessungen der Transportvorrichtungen insgesamt verändert. Außerdem sind verschiedene zum Einsatz kommende Werkzeuge auf vorteilhafte Weise zu berücksichtigen, indem ein Servopressenbewegungsprofil und ein Bewegungsprofil der Transportvorrichtung auf die individuellen Werkzeuge angepasst optimiert werden.

Alternativ gehen als geometrische Gegebenheiten zusätzlich Abmessungen des Werkstückes ein, insbesondere wenn ein Werkstück während des Transfers über die Abmessungen der Transportvorrichtung hinaus ragt.

Gemäß einer Ausgestaltung wird die geometrische Pressenöffnung anhand eines Servopressenöffnungswinkels bestimmt, bei dem eine Kollision der Transportvorrichtung mit der Servopresse beim Start einer Transferbewegung verhindert wird. Der Servopressenöffnungswinkel bezieht sich dabei insbesondere im Servopressenbewegungsprofil auf einen Kurbelwinkel von 0 bis 360°. Er beschreibt gerade den Zustand, bei dem die Presse gerade so weit offen steht, dass die Transferbewegung kollisionsfrei starten kann. Beispielsweise ist es bei einem 3D-Transfer ein innerhalb der Schließbewegung zu definierender Punkt.

Gemäß einer Ausgestaltung wird die geometrische Pressenschließung anhand eines Servopressenschließungswinkels bestimmt, bei dem eine Kollision der Servopresse mit der Transportvorrichtung am Ende einer Transferbewegung verhindert wird. Im Falle eines 3D-Transfers ist dies ein zu definierender Punkt während der Schließbewegung des Transfers. Bei einem sogenannten XZ-Transfer ist dies beispielsweise ein Punkt während der Senkbewegung.

Servopressenöffnungswinkel und Servopressenschließungswinkel werden also durch die Art des Transportsystems und durch dessen geometrische Gegebenheiten beeinflusst.

Gemäß einer Ausgestaltung wird anhand des Servopressenbewegungsprofils ein Bewegungsprofil der Transportvorrichtung referenziert. Sobald anhand der Optimierung das Servopressenbewegungsprofil und das Bewegungsprofil der Transportvorrichtung zueinanderpassend ermittelt wurden, ist das Bewegungsprofil der Transportvorrichtung noch hinsichtlich der Leitwerte anzupassen oder zu synchronisieren. Dabei ändert sich beispielsweise durch eine Änderung des Pressenprofils der Zusammenhang zwischen virtuellem Leitwert und Pressenöffnung, so dass der Leitwert angepasst, beispielsweise verschoben werden muss, damit die Bewegungen zusammenpassen.

In Ausführungsformen der Erfindung wird ein Servopressenzyklus auf den Transferzyklus angepasst, falls der Servopressenzyklus kürzer ist als der Transferzyklus. Der Transferzyklus, der mit einem Transfer aufgrund der Geschwindigkeitsgrenzwerte maximal erreichbar ist, dient beispielsweise als Master. Mit anderen Worten kann der Transfer alle relevanten Zeiten vorgeben: die Transferzeit und die Rücklaufzeit und damit auch die Zykluszeit.

Insbesondere geschieht dieses Anpassen der Zykluszeiten zwischen Servopresse und Transfer vorab, d.h. vor der Optimierung, indem der Transfer mit seinen maximal erreichbaren Geschwindigkeiten als Master für das Festlegen des Servopressenzyklus dient. Der so ermittelte Servopressenzyklus kann als weiterer Eingangsparameter für die Profiloptimierung angesehen werden.

Gemäß einer Ausgestaltung wird anhand des Servopressenbewegungsprofils ein angepasstes Bewegungsprofil der Transportvorrichtung berechnet. Beispielsweise wird die Zyklusdauer der Transportvorrichtung an den anhand des angepassten Servopressenbewegungsprofils sich ergebenden geänderten Servopressenzyklus angeglichen. Beispielsweise wird die Rücklaufzeit angepasst, so dass Presse und Transfer insgesamt mit einem übereinstimmenden Zyklus arbeiten. Servopresse und Transfer verfahren dann im Ergebnis mit einem übereinstimmenden Zyklus, welcher unter der Bedingung einer kollisionsfreien Bewegung von Transfer und Servopresse einen kürzest möglichen Zyklus darstellt.

Die Erfindung betrifft ferner eine Bewegungssteuerung nach Anspruch 8.

Die jeweilige Einheit kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ferner betrifft die Erfindung ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie zum Beispiel ein Mikroprozessor oder dergleichen in Frage.

Die Erfindung wird nachfolgend anhand von Ausführungsbeispielen mit Hilfe der Figuren näher erläutert.

Es zeigen:
Figur 1 eine schematische Darstellung einer Servopresse mit Transfer nach Art des Standes der Technik;
Figur 2 eine schematische Darstellung einer Bewegung eines 3D-Transfers in Relation zu einer Servopresse.
Figur 3 eine schematische Darstellung des Ablaufes eines Verfahrens zur Bewegungsplanung für eine Servopresse gemäß einem ersten Ausführungsbeispiel der Erfindung;
Figur 4 eine schematische Darstellung einer Bewegungssteuerung ausgebildet zur Bewegungsplanung für eine Servopresse gemäß einem zweiten Ausführungsbeispiel der Erfindung;
Figur 5 eine Bewegungskurve für eine Servopresse ermittelt mit einem Verfahren gemäß einem dritten Ausführungsbeispiel der Erfindung;
Figur 6 eine Bewegungskurve einer Servopresse ermittelt gemäß einem Verfahren zur Bewegungsplanung für eine Servopresse gemäß einem vierten Ausführungsbeispiel der Erfindung;
Figur 7 eine Bewegungskurve einer Servopresse ermittelt gemäß einem Verfahren zur Bewegungsplanung für eine Servopresse gemäß einem fünften Ausführungsbeispiel der Erfindung.

In den Figuren sind funktionsgleiche Elemente mit denselben Bezugszeichen versehen, sofern nichts anderes angegeben ist.

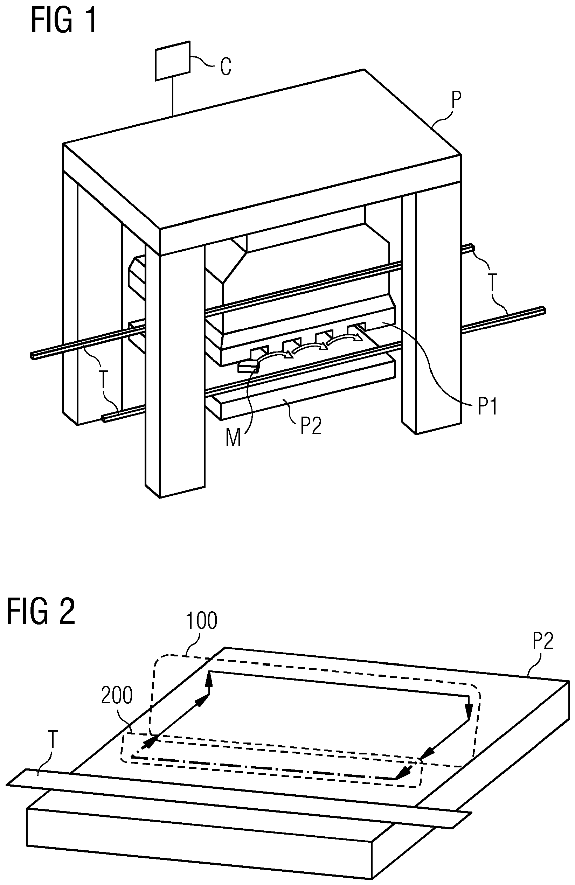

In Figur 1 ist schematisch eine Servopresse P dargestellt, welche ein Oberwerkzeug P1 und ein Unterwerkzeug P2 umfasst. Aufgrund der Ausgestaltung des Oberwerkzeuges P1 und/oder des Unterwerkzeuges P2 ergeben sich innerhalb der Servopresse P mehrere Bearbeitungsstationen. Ein zu bearbeitendes Gut M, beispielsweise ein Werkstück aus einem bestimmten Material, wird durch einen sogenannte Transfer T innerhalb der Servopresse P von einer Bearbeitungsstation zur nächsten transportiert, verdeutlicht durch Pfeile in der Figur 1. Es wird rein beispielhaft das Verfahren für einen 3D-Transfer vorgestellt. Ebenso ist das Verfahren vorteilhaft bei XY-Transfers oder XZ-Transfers oder Zangenvorschüben oder Walzenvorschüben einsetzbar.

Eine Bewegungssteuerung C ist vorgesehen, die Bewegung der Servopresse zu steuern.

Figur 2 verdeutlicht, wie ein Transfer T sich innerhalb der im Rahmen von Figur 1 beschriebenen Servopresse P typischerweise bewegt. Es ist neben dem Transfer T das Unterwerkzeug P2 abgebildet und über die mit Pfeilen markierte Strecke die Bewegung des Transfers T in Relation zum Unterwerkzeug P2 angedeutet. Dabei soll die anhand der Pfeile dargestellte Bewegung lediglich in Relation zur Geometrie der Servopresse verdeutlicht werden. Eine potentiell mögliche Bewegung des Unterwerkzeuges P2 soll in der Darstellung nicht berücksichtigt werden.

Der Bewegungsablauf des Transfers ist in zwei Bewegungsabschnitte untergliedert. Einerseits ist die Bewegung durch eine Transferzeit gekennzeichnet. Die während der Transferzeit stattfindende Bewegung umfasst die Abschnitte, welche innerhalb der Umrandung 100 gezeigt sind. Dabei durchfährt der Transfer T anteilig einen Schritt des Schließens, bei welchem beispielsweise ein Werkstück aufgenommen wird, gefolgt von einem Schritt des Hebens, bei welchem das Werkstück angehoben wird. Daraufhin erfolgt der eigentliche Vorschub, bei welchem das Werkstück zur nächsten Bearbeitungsstation transferiert wird. Es folgt schließlich das Senken, bei welchem das Werkstück abgelegt wird und anteilig ein Öffnen des Transfers, bei welchem der Transfer aus dem Arbeitsraum zurückfährt. In einem Transferzyklus schließt sich die Rücklaufzeit an, welche abläuft, während die Presse geschlossen ist. In der Figur 2 ist der zugehörige Bewegungsabschnitt mit dem Bezugszeichen 200 gekennzeichnet. Dabei fährt der Transfer beispielsweise noch weiter aus der Presse heraus oder in einen Seitenbereich der Presse und verfährt dort in die Ausgangsposition zurück, bereit um wieder in die Presse einzudringen, sobald dies kollisionsfrei möglich ist. Beispielsweise können während der Rücklaufzeit die Bewegungsabschnitte überlappen, beispielsweise startet die Rückfahrtbewegung, die gegenläufig zum Vorschub erfolgt, bevor die Öffnungsbewegung des Transfers vollständig abgeschlossen ist.

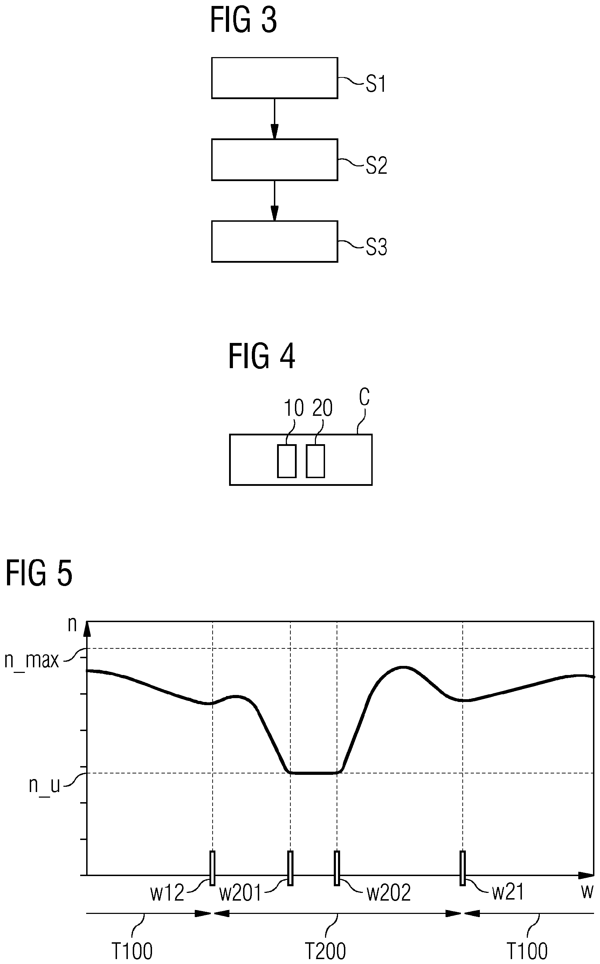

In Figur 3 ist nun schematisch ein Verfahrensablauf skizziert, in welchem gemäß einem ersten Ausführungsbeispiel der Erfindung in einem ersten Schritt S1 das Ermitteln einer minimalen Transferzeit sowie einer minimalen Rücklaufzeit für einen Bewegungszyklus des Transfers erfolgt. Dieser erste Schritt kann anhand von Messungen in einem laufenden Betrieb der Servopresse, beispielsweise beim Einrichten der Servopresse erfolgen. Alternativ können die zeitlichen Kenngrößen des Transfers zu einem beliebigen Zeitpunkt berechnet werden.

In einem zweiten Schritt S2 erfolgt ein Berechnen eines Servopressenbewegungsprofils, wobei in das Berechnen einerseits Parameter eingehen, die durch die Servopresse und/oder den Umformvorgang festgelegt sind. Beispielsweise ist eine ideale Umformgeschwindigkeit vorgesehen oder eine maximale Maschinengeschwindigkeit realisierbar. Diese Parameter beeinflussen und limitieren die Bewegung der Servopresse. Ferner gehen eine geometrische Pressenöffnung und eine geometrische Pressenschließung sowie die minimale Transferzeit und die minimale Rücklaufzeit ein, wobei eine Zeitphase, die sich aus der geometrischen Pressenöffnung und der geometrischen Pressenschließung ergibt, eine kollisionsfreie Bewegung des Transfers und der Servopresse unter Berücksichtigung geometrischer Gegebenheiten von Transfer und Servopresse ermöglicht. Die Zeitphase ist insbesondere die Zeit, die für die Strecke 100 aus Figur 2 zur Verfügung steht.

Auf vorteilhafte Weise umfasst die minimale Transferzeit teilweise auch das Eindringen in die Presse und teilweise das Verlassen der Presse und somit auch das Aufnehmen und Ablegen des Werkstückes. Die Transferzeit wird vorteilhafterweise definiert über den gesamten Bewegungsablauf des Transfers, welcher eine geöffnete Stellung der Servopresse erfordert.

In dem Fall, dass beispielsweise die minimale Transferzeit bereits kürzer ist als oder gleich lang ist wie eine Zeitdauer aus einem Servopressenbewegungsprofil ohne Berücksichtigung des Transfers, sind die pressenspezifischen Eingangsparameter bei der Optimierung limitierend. Der Transfer ist dann schnell genug, um die Vorschubbewegung inklusive des Aufnehmens des Werkstückes und des Ablegens in der nächsten Bearbeitungsstation innerhalb der Zeit durchzuführen, in welcher die Servopresse geöffnet ist und die Presse kann beispielsweise unter Berücksichtigung einer maximalen Motordrehzahl schnellstmöglich die Bewegung in der geöffneten Stellung durchführen.

Das Anpassen des Servopressenbewegungsprofils erfolgt dabei derart, dass die minimale Transferzeit als ein Eingangsparameter in die Berechnung eingeht. Beispielsweise ist ein Optimierungsalgorithmus vorgesehen, welcher die minimale Transferzeit berücksichtigen kann.

Die minimale Transferzeit kann eine in Hinblick auf Performance der Servopresse und Energiebedarf der Servopresse optimierte minimale Transferzeit sein. Es muss sich insbesondere nicht um die absolut kürzest mögliche Transferzeit handeln, die der Transfer bewerkstelligen kann. Es ist hingegen genauso möglich, dass eine etwas längere Zeitdauer angenommen wird, beispielsweise um energieeffizienter zu arbeiten.

Im dritten Schritt S3 erfolgt das Referenzieren des Transfers. Somit wird auf vorteilhafte Weise ein Workflow zur Anpassung eines Servopressenbewegungsprofils und eines Transportvorrichtungsbewegungsprofils bereitgestellt, dessen Ergebnis eine optimierte Bewegung der Servopresse bei gleichzeitiger Sicherstellung einer Kollisionsfreiheit ist.

In Figur 4 ist schematisch der Aufbau einer Bewegungsteuerung C abgebildet. Es ist eine erste Einheit 10 zum Ermitteln einer minimalen Transferzeit sowie einer minimalen Rücklaufzeit für einen Bewegungszyklus der Transportvorrichtung vorgesehen. Die minimale Transferzeit sowie die minimale Rücklaufzeit können beispielsweise in einem separaten Verfahrensschritt ermittelt werden, in dem die Transportvorrichtung in einer Testphase mit maximal möglicher Geschwindigkeit den Transport eines Werkstückes bewerkstelligt. Beispielsweise ist in der ersten Einheit 10 dann lediglich der Wert der durch die Transportvorrichtung zu bewerkstelligenden Zeiten hinterlegt. In einer alternativen Variante kann die erste Einheit 10 eine Eingabeschnittstelle aufweisen, so dass die durch die Transportvorrichtung zu bewerkstelligenden Zeiten der Bewegungssteuerung C beispielsweise durch einen Anlagenbetreiber vorgegeben werden können.

Eine zweite Einheit 20 ist dazu eingerichtet, das Berechnen der Optimierung durchzuführen. Dafür ist insbesondere ein Optimierungsalgorithmus auf der zweiten Einheit, beispielsweise einer Prozessoreinheit der Steuerung C, vorgesehen, der das Servopressenbewegungsprofil unter Berücksichtigung der Parameter der Presse und der Transportvorrichtung berechnet.

Vorteilhafterweise wird das durch die zweite Einheit 20 berechnete Servopressenbewegungsprofil einer Bewegungssteuerung der Transportvorrichtung zur Verfügung gestellt, welche das Bewegungsprofil der Transportvorrichtung an das Servopressenbewegungsprofil anpasst. Die Bewegungssteuerung der Transportvorrichtung ist beispielsweise in die der Servopresse integriert, so dass die Daten des berechneten Servopressenbewegungsprofils innerhalb der Steuerung C an eine Einheit zur Verfügung gestellt werden, die Transportvorrichtungsbewegungsprofil erstellt.

Alternativ sind die Bewegungssteuerungen von Servopresse und Transportvorrichtung separat ausgestaltet, und Parameter, die sich aus dem berechneten Servopressenbewegungsprofil für die Bewegungssteuerung der Transportvorrichtung ergeben, wie beispielsweise ein berechneter Servopressenzyklus oder Referenzierungspunkte zum Synchronisieren der Bewegung von Servopresse und Transportvorrichtung, werden der Bewegungssteuerung der Transportvorrichtung über eine Kommunikationsverbindung bereitgestellt.

Figur 5 zeigt in einem Diagramm aufgetragen eine Bewegungskurve für eine in einem dritten Ausführungsbeispiel der Erfindung beschriebene Exzenterpresse mit Transfer. In Figur 5 ist die Exzenter-Drehzahl n in Hub pro Minute über den Kurbelwinkel w in Grad abgebildet. Dabei ist der Kurbelwinkelverlauf von 0° bis 360° dargestellt, d.h. ein Pressenzyklus. Die horizontale Achse bildet somit den Kurbelwinkel w ab, auf der vertikalen Achse ist die Exzenter-Drehzahl n angegeben. In einem Kurbelwinkelbereich, dessen Zeitdauer im Bewegungsprofil des Transfers der Rücklaufzeit T200 entspricht, ist die Servopresse in einem Zustand, in welchem der Stößel soweit abgesenkt ist, dass der Transfer sich nicht kollisionsfrei im Pressenarbeitsraum aufhalten kann. Daher ist sicherzustellen, dass bereits der Rücklauf des Transfers begonnen hat, sobald ein Servopressenschließungswinkel w12 erreicht ist, bei dem die Pressenstellung geschlossen ist. Beispielsweise ist ab einem Kurbelwinkel w von 90° die Presse aus Sicht des Transfers geschlossen, so dass ein Agieren des Transfers ab diesem Pressenwinkel nicht mehr möglich ist.

Ab einem Servopressenöffnungswinkel w21 von beispielsweise 270° ist eine Offenstellung der Presse erreicht. D.h. dass ab diesem Winkel die Transferbewegung durchgeführt werden kann. Eine Transferzeit T100 kann dann über die 360° hinaus im nächsten Pressenzyklus bis hin zum Servopressenschließungswinkel w12 stattfinden. In eine Berechnung eines Servopressenbewegungsprofils gemäß dem Stand der Technik geht beispielsweise eine maximale Motordrehzahl n_max ein sowie eine optimale Umformgeschwindigkeit n_u, bei welcher der Umformvorgang stattfinden soll. Dieser Umformvorgang findet beispielsweise in einem Bereich von 160° bis 180° des Kurbelwinkels w statt, wobei der Beginn der Umformbewegung durch das Bezugszeichen w201 und das Ende der Umformbewegung durch das Bezugszeichen w202 gekennzeichnet ist. Dieser Bereich wird auch als Arbeitsbereich bezeichnet. Außerdem gehen in die Berechnung Bewegungszeiten für die Transferbewegung und die Rücklaufbewegung ein, die maximal durch den Transfer zu erreichen sind, d.h. die kürzest möglichen realisierbaren Transportzeiten bei maximaler Geschwindigkeit und Beschleunigung der Transportvorrichtung. Beispielsweise sind die Zeiten derart, dass die Servopresse auf maximale Performance hin optimiert betrieben werden kann, ohne aufgrund des Transfers gebremst werden zu müssen.

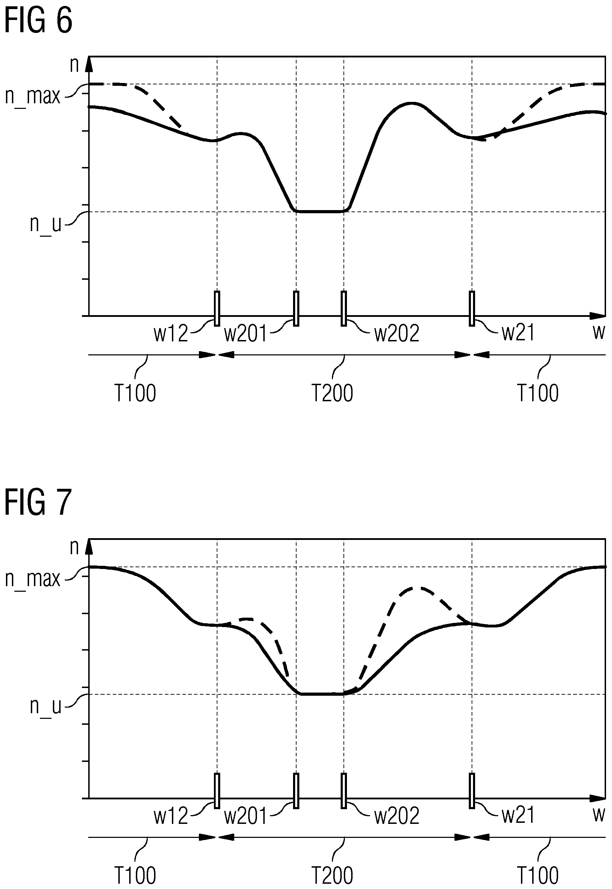

In Figur 6 ist zur Veranschaulichung die Bewegungskurve in einem Diagramm analog zu dem in Figur 5 dargestellt, bei welchem der Transfer und die durch den Transfer realisierbare Transferzeit und Rücklaufzeit sich derart auf das Servopressenprofil auswirken, dass ein Abbremsen während des Vorschubs erfolgt. Gemäß dem vierten Ausführungsbeispiel der Erfindung ist der Zeitbedarf des Transfers für den Vorschub beispielsweise größer als die Zeitdauer, die die Presse für diesen Vorgang ohne Berücksichtigung des Transfers zur Verfügung stellt. Die Presse würde bei maximaler Geschwindigkeit betrieben und wäre dann derart eingestellt, dass im Bereich außerhalb des Arbeitsbereiches und insbesondere sobald die Presse geöffnet ist, der Stößel möglichst schnell nach oben und wieder nach unten, d.h. im Bereich des oberen Umkehrpunktes, bewegt wird. Die in diesem Bereich aufgrund der Servopressenoptimierung ohne Berücksichtigung des Transfers mögliche Bewegungskurve der Servopresse ist in Figur 6 strichliniert dargestellt und entspricht dem anhand von Figur 5 ermittelten Bewegungsprofil, wenn der Transfer den Vorschub in einer ausreichend kurzen Zeit bewerkstelligen kann.

In dem Bereich des Kurbelwinkels w, welchem die Transferzeit T100 entspricht und in welchem der Vorschub durchgeführt wird, erfolgt eine Anpassung des Servopressenbewegungsprofils, wobei als Eingangsparameter wiederum die Transferzeit eingeht, welche der Transfer bewerkstelligen kann und die nun eine entsprechende Auswirkung auf die Optimierung hat. Die so ermittelte Kurve ist durch eine niedrigere Exzenterdrehzahl im Bereich des geöffneten Kurbelwinkels rechts des Pressenöffnungswinkels w21 bzw. links des Pressenschlie-βungswinkels w12 gekennzeichnet.

Das bedeutet zugleich, dass die Zeitdauer, die der Transfer für den Vorschub zur Verfügung hat, nun länger ist, und zwar genau so lang, wie sie mindestens sein soll, um Werkstücke in der Presse kollisionsfrei transferieren zu können.

Die Bewegungssteuerung des Transfers passt die Bewegung des Transfers wiederum an das angepasste Servopressenbewegungsprofil an, damit die Bewegungen entsprechend synchronisiert verlaufen. Insbesondere erfolgt eine Referenzierung anhand einer Synchronisierung auf den virtuellen Leitwert, der der Bewegungssteuerung aus dem Bewegungsprofil der Presse vorgegeben wird.

Anhand von Figur 7 ist ein fünftes Ausführungsbeispiel der Erfindung beschrieben. In diesem ist der Zeitbedarf des Transfers für die Fahrt zurück in die Grundposition höher als die Zeitdauer, die die Servopresse für diesen Bewegungsabschnitt zur Verfügung stellt. Entsprechend wird das Servopressenbewegungsprofil in dem Abschnitt angepasst, in welchem der Kurbelwinkel w eine geschlossene Position bedeutet. Dieser Abschnitt wird im Diagramm durch den Bereich rechts des Pressenschließungswinkels w12 und links des Pressenöffnungswinkels w21 gekennzeichnet. Er entspricht dem Bewegungsabschnitt während der Rücklaufzeit T200. Der sogenannte Arbeitsbereich, in welchem die Umformung stattfindet, soll von der Optimierung ausgenommen bleiben. In diesem Bereich verfährt die Presse unveränderlich mit der idealen Umformgeschwindigkeit. Jeweils davor und danach wird die Exzenter-drehzahl reduziert, um eine längere Zeitspanne zur Verfügung zu stellen, innerhalb welcher der Transfer die Rücklaufbewegung bewerkstelligt. Die Bewegungskurve aus den Figuren 5 und 6 ist im Bereich zwischen w12 und w201 sowie zwischen w202 und w21 strichliniert dargestellt.

In weiteren Ausgestaltungen erfolgt sowohl eine Optimierung in Hinblick auf die Transferzeit als auch eine Optimierung in Hinblick auf die Rücklaufzeit. Dies entspricht einer Kombination des vierten mit dem fünften Ausführungsbeispiel. Dadurch wird die Servopresse optimiert gebremst, das heißt so weit und in den Abschnitten gebremst, dass ein kollisionsfreier Transport vom zu pressenden Werkstück ermöglicht wird, und zugleich nur so wenig wie möglich gebremst.

Die Erfindung betrifft ein Verfahren nach Anspruch 1 zur Bewegungsplanung für eine Servopresse sowie eine Bewegungssteuerung nach Anspruch 8, ausgebildet zur Bewegungsplanung für eine Servopresse sowie ein zugehöriges Computerprogrammprodukt nach Anspruch 9, wobei eine minimale Transferzeit sowie eine minimale Rücklaufzeit in einem Bewegungszyklus einer Transportvorrichtung berücksichtigt werden.

## Patentansprüche

1. Verfahren zur Bewegungsplanung für eine Servopresse, wobei räumlich integriert in die Servopresse mindestens eine Transportvorrichtung zum Bewegen eines oder mehrerer durch die Servopresse zu bearbeitender Güter vorgesehen ist, aufweisend die folgenden Schritte:
- Ermitteln (S1) einer minimalen Transferzeit sowie einer minimalen Rücklaufzeit für einen Bewegungszyklus der Transportvorrichtung;
- Berechnen (S2) eines Servopressenbewegungsprofils, wobei in das Berechnen Parameter eingehen, die durch die Servopresse und/oder den Umformvorgang festgelegt sind, eine geometrische Pressenöffnung und eine geometrische Pressenschließung sowie die minimale Transferzeit und die minimale Rücklaufzeit, wobei eine Zeitphase, die sich aus der geometrischen Pressenöffnung und der geometrischen Pressenschließung ergibt, eine kollisionsfreie Bewegung der Transportvorrichtung und der Servopresse unter Berücksichtigung geometrischer Gegebenheiten von Transportvorrichtung und Servopresse ermöglicht,
wobei das Servopressenbewegungsprofil auf eine maximale Servopressenperformance unter Berücksichtigung energieoptimierender Verzögerungen hin optimiert wird.

2. Verfahren nach einem der vorstehenden Ansprüche, wobei als Parameter der Servopresse und/ oder des Umformvorganges eine maximale Motorgeschwindigkeit, eine maximale Stößelgeschwindigkeit, eine vorgebbare optimale Umformgeschwindigkeit und/oder geometrische Abmessungen eines Arbeitsbereiches eingehen.

3. Verfahren nach einem der vorstehenden Ansprüche, wobei in die geometrischen Gegebenheiten Abmessungen der Transportvorrichtung und der Servopresse eingehen.

4. Verfahren nach einem der vorstehenden Ansprüche, wobei die geometrische Pressenöffnung anhand eines Servopressenöffnungswinkels bestimmt wird, bei dem eine Kollision der Transportvorrichtung mit der Servopresse beim Start der Transferbewegung verhindert wird.

5. Verfahren nach einem der vorstehenden Ansprüche, wobei die geometrische Pressenschließung anhand eines Servopressenschließungswinkels bestimmt wird, bei dem eine Kollision der Servopresse mit der Transportvorrichtung am Ende einer Transferbewegung verhindert wird.

6. Verfahren nach einem der vorstehenden Ansprüche, wobei anhand des Servopressenbewegungsprofils ein Bewegungsprofil der Transportvorrichtung referenziert wird.

7. Verfahren nach einem der vorstehenden Ansprüche, wobei anhand des Servopressenbewegungsprofils ein angepasstes Bewegungsprofil der Transportvorrichtung berechnet wird.

8. Bewegungssteuerung umfassend eine Optimierungseinheit ausgebildet zur Bewegungsplanung für eine Servopresse (P), wobei räumlich integriert in die Servopresse (P) mindestens eine Transportvorrichtung (T) zum Bewegen eines oder mehrerer durch die Servopresse (P) zu bearbeitender Güter (M) vorgesehen ist, umfassend:
- eine erste Einheit (10) zum Ermitteln einer minimalen Transferzeit sowie einer minimalen Rücklaufzeit für einen Bewegungszyklus der Transportvorrichtung;
- eine zweite Einheit (20) zum Berechnen eines Servopressenbewegungsprofils, wobei der zweiten Einheit Parameter, die durch die Servopresse und/oder den Umformvorgang festgelegt sind, eine geometrische Pressenöffnung und eine geometrische Pressenschließung sowie die minimale Transferzeit und die minimale Rücklaufzeit vorgebbar sind, wobei eine Zeitphase, die sich aus der geometrischen Pressenöffnung und der geometrischen Pressenschließung ergibt, eine kollisionsfreie Bewegung der Transportvorrichtung und der Servopresse unter Berücksichtigung geometrischer Gegebenheiten von Transportvorrichtung und Servopresse ermöglicht,
wobei die Bewegungssteuerung ausgebildet ist, das Servopressenbewegungsprofil auf eine maximale Servopressenperformance unter Berücksichtigung energieoptimierender Verzögerungen hin zu optimieren.

9. Computerprogrammprodukt mit einem Computerprogramm, das Mittel zur Durchführung des Verfahrens nach einem der Ansprüche 1 bis 7 aufweist, wenn das Computerprogramm auf einer programmgesteuerten Einrichtung zur Ausführung gebracht wird.

## Claims

1. Method for planning movements for a servo press, wherein at least one transport apparatus for moving one or more goods to be processed by the servo press is provided in a manner spatially integrated into the servo press, including the following steps:
- ascertaining (S1) a minimum transfer time and a minimum return time for a movement cycle of the transport apparatus;
- calculating (S2) a servo press movement profile, wherein the calculation includes parameters set by the servo press and/or the forming process, a geometric press opening and a geometric press closure and the minimum transfer time and the minimum return time, wherein a time phase emerging from the geometric press opening and the geometric press closure enables a collision-free movement of the transport apparatus and of the servo press, taking account of geometric conditions of the transport apparatus and servo press, wherein the servo press movement profile is optimized towards a goal of a maximum servo press performance, taking account of energy-optimizing delays.

2. Method according to the preceding claim, wherein a maximum motor speed, a maximum slide speed, a predeterminable optimal forming speed and/or geometric dimensions of a work region are included as parameters of the servo press and/or of the forming process.

3. Method according to either of the preceding claims, wherein dimensions of the transport apparatus and servo press are included in the geometric conditions.

4. Method according to any of the preceding claims, wherein the geometric press opening is determined on the basis of a servo press opening angle, at which a collision of the transport apparatus with the servo press is prevented at the start of the transfer movement.

5. Method according to any of the preceding claims, wherein the geometric press closure is determined on the basis of a servo press closure angle, at which a collision of the servo press with the transport apparatus is prevented at the end of a transfer movement.

6. Method according to any of the preceding claims, wherein a movement profile of the transport apparatus is referenced on the basis of the servo press movement profile.

7. Method according to any of the preceding claims, wherein an adapted movement profile of the transport apparatus is calculated on the basis of the servo press movement profile.

8. Movement controller comprising an optimization unit embodied for planning movements for a servo press (P), wherein at least one transport apparatus (T) for moving one or more goods (M) to be processed by the servo press (P) is provided in a manner spatially integrated into the servo press (P), comprising:
- a first unit (10) for ascertaining a minimum transfer time and a minimum return time for a movement cycle of the transport apparatus;
- a second unit (20) for calculating a servo press movement profile, wherein parameters set by the servo press and/or the forming process, a geometric press opening and a geometric press closure and the minimum transfer time and the minimum return time can be predetermined for the second unit, wherein a time phase emerging from the geometric press opening and the geometric press closure facilitates a collision-free movement of the transport apparatus and of the servo press, taking account of geometric conditions of the transport apparatus and servo press, wherein
the movement controller is designed to optimize the servo press movement profile towards a goal of a maximum servo press performance, taking account of energy-optimizing delays.

9. Computer program product having a computer program comprising means for carrying out the method according to any of Claims 1 to 7 when the computer program is executed on a program-controlled device.

## Revendications

1. Procédé de planification de mouvement pour une presse servo, dans lequel est prévu, d'une manière intégrée spatialement dans la presse servo, au moins un dispositif de transport pour déplacer une ou plusieurs marchandises à traiter par la presse servo, présentant les étapes suivantes :
- détermination (S1) d'un temps de transfert minimal ainsi que d'un temps de retour minimal pour un cycle de mouvement du dispositif de transport ;
- calcul (S2) d'un profil de mouvement de la presse servo, dans lequel entrent dans le calcul des paramètres, qui sont fixés par la presse servo et/ou le processus de déformation, une ouverture de presse géométrique et une fermeture de presse géométrique ainsi que le temps de transfert minimal et le temps de retour minimal, dans lequel une phase de temps qui résulte de l'ouverture de presse géométrique et de la fermeture de presse géométrique, permet un mouvement sans collision du dispositif de transport et de la presse servo en tenant compte de données géométriques du dispositif de transport et de la presse servo, dans lequel le profil de mouvement de la presse servo est optimisé pour une performance de presse servo maximale en tenant compte de retards optimisant l'énergie.

2. Procédé selon l'une des revendications précédentes, dans lequel comme paramètres de la presse servo et/ou du processus de déformation entrent en jeu une vitesse maximale du moteur, une vitesse maximale du coulisseau, une vitesse de déformation optimale pouvant être prédéfinie et/ou des dimensions géométriques d'une zone de travail.

3. Procédé selon l'une des revendications précédentes, dans lequel des dimensions du dispositif de transport et de la presse servo entrent en jeu dans les données géométriques.

4. Procédé selon l'une des revendications précédentes, dans lequel l'ouverture de presse géométrique est déterminée à l'aide d'un angle d'ouverture de la presse servo, dans lequel une collision du dispositif de transport avec la presse servo est empêchée au début du mouvement de transfert.

5. Procédé selon l'une des revendications précédentes, dans lequel la fermeture de presse géométrique est déterminée à l'aide d'un angle de fermeture de la presse servo, dans lequel une collision de la presse servo avec le dispositif de transport est empêchée à la fin d'un mouvement de transfert.

6. Procédé selon l'une des revendications précédentes, dans lequel un profil de mouvement du dispositif de transport est référencé à l'aide du profil de mouvement de la presse servo.

7. Procédé selon l'une des revendications précédentes, dans lequel à l'aide du profil de mouvement de la presse servo est calculé un profil de mouvement adapté du dispositif de transport.

8. Commande de mouvement comprenant une unité d'optimisation conçue pour la planification de mouvement pour une presse servo (P), dans laquelle est prévu, d'une manière intégrée spatialement dans la presse servo (P), au moins un dispositif de transport (T) pour déplacer une ou plusieurs marchandises à traiter (M) par la presse servo (P), comprenant :
- une première unité (10) pour déterminer un temps de transfert minimal ainsi qu'un temps de retour minimal pour un cycle de mouvement du dispositif de transport ;
- une deuxième unité (20) pour calculer un profil de mouvement de la presse servo, dans lequel à la deuxième unité des paramètres, qui sont fixés par la presse servo et/ou le processus de déformation, une ouverture de presse géométrique et une fermeture de presse géométrique ainsi que le temps de transfert minimal et le temps de retour minimal peuvent être prédéfinis, dans lequel une phase de temps qui résulte de l'ouverture de presse géométrique et de la fermeture de presse géométrique, permet un mouvement sans collision du dispositif de transport et de la presse servo en tenant compte de données géométriques du dispositif de transport et de la presse servo, dans lequel la commande de mouvement est conçue pour optimiser le profil de mouvement de la presse servo pour une performance de presse servo maximale en tenant compte de retards optimisant l'énergie.

9. Produit de programme informatique avec un programme informatique qui présente des moyens d'exécution du procédé selon l'une des revendications 1 à 7, lorsque le programme informatique est mis à exécution sur un dispositif commandé par programme.
